Europäisches Patentamt

European Patent Office

Office européen des brevets

(19)

(11) Publication number: 0 503 323 A2

# EUROPEAN PATENT APPLICATION

(21) Application number: 92102777.7

(22) Date of filing: 19.02.92

(51) Int. Cl.⁵: H04L 12/40

(30) Priority: 19.02.91 US 657782

(43) Date of publication of application:
16.09.92 Bulletin 92/38

(84) Designated Contracting States:
CH DE FR GB LI

(71) Applicant: PITNEY BOWES INC.
World Headquarters One Elmcroft
Stamford Connecticut 06926-0700(US)

(72) Inventor: DiGiulio, Peter C.
128 Thornhill Road
Fairfield, Conn. 06430(US)
Inventor: Lee, David K.
12 Alpine Road
Monroe, Conn. 06468(US)
Inventor: Salazar, Edilberto I.
116 Pocono Road
Brookfield, Conn. 06804(US)

(74) Representative: Ritter und Edler von Fischern,
Bernhard,Dipl.-Ing. et al
HOFFMANN - EITLE & PARTNER
Arabellastrasse 4
W-8000 München 81(DE)

(54) Serial bus interface and method.

(57) A communication interface and method wherein messages are transmitted from slave nodes (11,11',11") to a master node (12) only in response to polling by the master node, and the responses by the slave node include signals corresponding to the number of data bytes that will be sent, preceded by a reply byte that constitutes a checksum. The number of data bytes in a message may be limited, so that messages longer than a given number of data bytes may require transmission in a plurality of message packets in response to separate polling signals from the master node (12).

FIG. 1

The invention relates to serial communication interfaces for communication between a master node and one or more slave nodes, wherein the slave nodes may have sub nodes, and a method for employing such interfaces. While the invention is especially adaptable to mail processing machines, it will be apparent that its application is not so limited.

## BACKGROUND OF THE INVENTION

A high speed mail processing machine (MMP) is disclosed in U.S. Patent No. US-A-5 007 054 (EP-A-0 384 078) wherein an accounting system node, mailing machine controller and PIN and data node are intercoupled for serial communication. In this system, communications may originate in either the accounting system node or the mailing machine controller, with contention being avoided by assigning priority to the accounting system node.

The MMP system requires high speed communication for data transfer in order to control real time machine operation. The communication system can be characterized by (1) short message in burst rate, (2) short distance (less than 30 feet), (3) real-time data exchange, (4) low cost, and (5) requirements of high reliability.

## SUMMARY OF THE INVENTION

The invention is directed to the provision of improved interfaces and methods for use in systems of the above type.

Briefly stated, an apparatus is provided for receiving data and control signals from a bus and for applying data and control signals to the bus. The apparatus includes a transmit buffer for storing messages for application to the bus, means for storing the full or empty states of the transmit buffer, and a controller. In accordance with one embodiment of the invention, the controller comprises means responsive to the receipt of a signal from the bus that includes a predetermined control signal for applying to the bus a byte signal representing the number of bytes of data stored in the transmit buffer, and means responsive to the application of the byte signal to the bus for applying the data bytes to the bus, whereby the number of data bytes applied to the bus corresponds to the byte signal.

The apparatus may further comprise means responsive to the receipt of the predetermined control signal for applying to the bus a reply signal before applying the byte signal thereto, the reply signal including a checksum of the predetermined control signal and the reply signal and the status of the transmit buffer. The apparatus may also comprise means responsive to the application of the data bytes to the bus for applying cyclic redundancy check bytes to the bus corresponding to the byte signal and data signals.

In accordance with a further preferred feature of the invention, the apparatus comprises means for storing an address unique to the apparatus, and the controller comprises means responsive to the receipt of a signal from the bus that includes the address and a first control signal for applying to the bus a byte signal representing the number of bytes of data stored in the transmit buffer, and means responsive to the application of the byte signal to the bus for applying the data bytes to the bus, whereby the number of data bytes applied to the bus corresponds to the byte signal.

In accordance with another aspect of the invention, a communication system is provided for communication between a master node and a plurality of slave nodes via a bus, wherein each of the master and slave nodes includes control means, and means for transmitting control and data bytes via the bus and for receiving control and data bytes from the bus. Each of the slave nodes preferably has a unique address. The master node comprises means for polling the slave nodes by applying address signals to the bus corresponding sequentially to the addresses of the slave nodes. Each of the slave nodes also comprises means responsive to the receipt of an address signal corresponding thereto for applying a reply signal to the bus, means responsive to the application of the reply signal to the bus for applying a byte signal to the bus corresponding to a number of bytes, and means responsive to application of the byte signal to the bus for applying a number of data bytes to the bus corresponding to the byte signal.

In another aspect of the invention, in a communication system for communication of messages from a node via a bus, the node comprises means for applying messages packets to the bus having a maximum of N bytes, wherein N is an integer greater then one in response to the receipt from the bus of a signal requesting the application of a message packet to the bus by the first node. The node further comprises means for decomposing messages for transmission thereby that have a greater number of bytes than N into a plurality of message packets each having no greater than N bytes, and means for sequentially transmitting the plurality of message packets in response to the receipt of sequential request for messages from the bus. Control information for the reconstruction of the message may be provided in the first byte of the first message packet of the plurality of message packets.

From another aspect, the invention also provides a method for communicating with an apparatus for receiving data and control signals from a bus and for applying data and control signals to the bus, wherein the apparatus includes a transmit buffer for storing messages for application to the bus, and a controller. This method comprises responding to the receipt of a signal from the bus that includes a predetermined control signal by applying to the bus a byte signal representing the number of bytes of data stored in the transmit buffer, and applying the data bytes to the bus in response to the application of the byte signal to the bus, whereby the number of data bytes applied to the bus corresponds to the byte signal.

From another aspect, a further method comprises storing an address unique to the apparatus, applying to the bus a byte signal representing the number of bytes of data stored in the transmit buffer in response to the receipt of a signal from the bus that includes the address and a first control signal, and applying the data bytes to the bus in response to the application of the byte signal to the bus, whereby the number of data bytes applied to the bus corresponds to the byte signal.

A still further method communication of messages from a first node via a bus, in accordance with another aspect of the invention, comprises applying messages packets to the bus having a maximum of N bytes, wherein N is an integer greater then one in response to the receipt from the bus of a signal requesting the application of a message packet to the bus by the first node, decomposing messages for transmission by the first node that have a greater number of bytes than N into a plurality of message packets each having no greater than N bytes, and sequentially transmitting the plurality of message packets in response to the receipt of sequential request for messages from the bus.

## BRIEF DESCRIPTION OF THE DRAWING

In order that the invention may be more clearly understood, it will now be disclosed in greater detail with reference to the accompanying drawings, wherein:

Fig. 1 is a block diagram of a system that may incorporate the present invention; and

Fig. 2 is a block diagram of a slave node, in accordance with one embodiment of the invention.

## DETAILED DISCLOSURE OF THE INVENTION

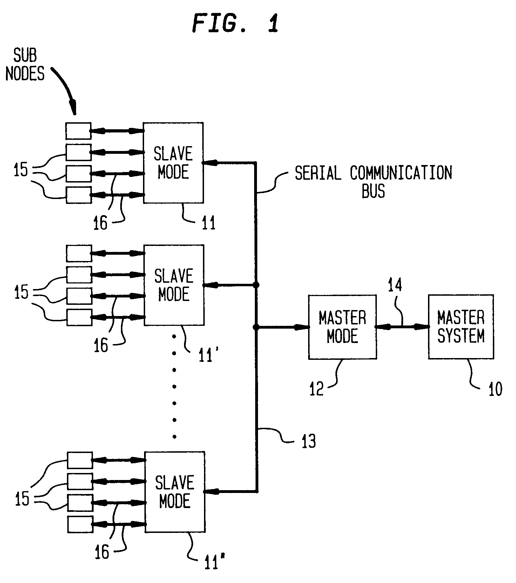

Fig. 1 is a block diagram of a communication system of the type with which the present invention is concerned. In this system, a master system 10 is coupled to communicate with one or more slave nodes 11, '11', 11" via a master node 12 and a serial communication bus 13. The master node may be coupled to the master system via a parallel communication bus 14. Each of the slave nodes may be coupled to one or more slave sub-nodes 15, for example via parallel buses 16. In a preferred embodiment of the invention, there may be up to 14 slave nodes, and each of the slave nodes may be coupled to from 1 to 4 slave sub nodes 15.

The master node 12 and the slave nodes 11, 11', 11" are communication interfaces, and these interfaces may be structurally similar. As will be apparent in the following disclosure, the master and slave nodes are provided with different software.

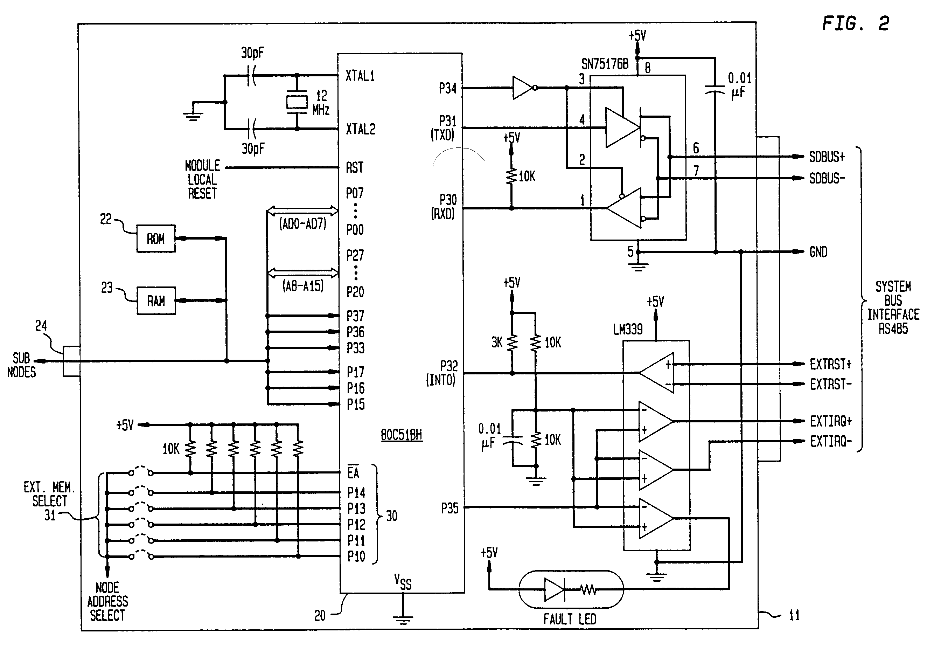

The slave nodes, such as the node 11 illustrated in Fig. 2, include a microcontroller 20, such as type 80C31 or 80C51. The serial communication ports SDBUS+ and SDBUS- of the slave node 11 are coupled to the serial terminals of the microcontroller via differential transceiver 21.

The serial communication bus is preferably a half-duplex communication channel, wherein the signal SDBUS+ = 1 and the signal SDBUS- = 0 for logic bit = 1, and the signal SDBUS+ = 0 and the signal SDBUS- = 1 for logic bit = 0. The bus is preferably in accordance with RS-485 protocol with electrically compatible transceiver drivers, having balanced transmission lines with $Z_o$ = 120 ohm, for transmission at a 375 KBits/sec baud rate. The microcontroller may also be coupled to other ports. For example, external restart lines EXTRST+ and EXTRST- are in an active state during power up and down (system reset), wherein the active state occurs when EXTRST+ = 0 and EXTRST- = 1. These lines are driven active by a Core System Controller node (a not illustrated controller for the system) to synchronize the system bus, or, when the system is not ready for normal operation, i.e. during fault conditions or imminent power failure warning.

In addition, external interrupt lines EXTIRQ+ and EXTIRQ- are driven active by the slave node to call the attention of the Core System Controller. These lines are in an active state when EXTIRQ+ = 0 and EXTIRQ- = 1.

As illustrated in Fig. 2, various ports of the microcontroller of the slave node 11 are coupled to internal ROM 22 and RAM 23 as well as to port 24 for connection to the sub nodes.

The RAM area (or registers) of the slave node that is commonly accessible by both the driver and an application program stored in ROM in the slave node consists of:

    (1) transmit flag (TFLAG),
    (2) receive flag (RFLAG),
    (3) transmit buffer, and a
    (4) receive buffer.

A COM_STAT may area may additionally be provided in the master node.

Initialization of the internal RAM in the slave node may be effected by the boot-exec program of the slave node.

The master node and slave nodes communicate with one another only with messages of the following formats.:

1. For idle polling by the master node:

=ADD.CMD¢ (REPLY)

2. For broadcasting a message from the master node for reception by all of the slave nodes:

=ADD.CMD¢=BYTE.C¢=data¢[=data¢...=data¢]-=CRCH¢=CRCL¢

3. For sending a message from the transmit buffer of the master node to a slave node:

=ADD.CMD¢(REPLY)=BYTE.C¢=data¢ [=data¢...=data¢]=CRCH¢__CRCL¢(ACK/NAK)

4. For directing a slave node to send a message to the master node:

=ADD.CMD¢(REPLY)(BYTE.C)(data)[(data)-...(data)] (CRCH) (CRCL) =ACK/NAK¢

In the above signals:

=...¢ represents a byte transmitted by the master node,

(...) represents a byte transmitted by a slave node,

[...] represents optional data bytes,

=ADD.CMD¢ is an address and command byte from the master node,

(REPLY) is a reply from a slave node to the master command

=BYTE.C¢ or (BYTE.C) are bytes representing the number of =data¢ or (data) bytes in a message,

=data¢ or (data) are data bytes from the master node and slave nodes, respectively,

=CRCH¢=CRCL¢ or (CRCH)(CRCL) are two byte cyclic redundancy check signals which cover from and include the =BYTE.C¢ or (BYTE.C) byte and the last =data¢ or (data) byte,

=ACK/NAK¢ or (ACK/NAK) are positive/-negative acknowledgements for the data integrity from the =BYTE.C¢ or (BYTE.C) to the last =data¢ or (data) byte.

The 8031/8051 microcontroller is programmable to have a mode 2 operating mode for the UART function thereof, wherein the serial signals have 11 bits. In this mode the first bit is a start bit, and the next 8 bits are data bits. The next bit, designated as the 9th bit, is programmable. In accordance with the invention, this bit is set in the byte of =ADD.CMD¢, i.e. the address and command byte, in order to distinguish the address and command byte from other bytes. All other bytes in the format are sent with the 9th bit cleared. At receiving end, software allows a receive-interrupt only when the 9th bit is set. Whenever the 9th bit is set, the communication driver always restarts the receiving sequence.

The =ADD.CMD¢ signal always originates in the master node, and is comprised of the following bits:

1. A 4 bit address of a slave node that the master node wishes to address. In this address portion, the address 0000 is not used, and the address 1111 comprises an address to broadcast a signal to all of the slave nodes connected to the system. As a consequence, in the preferred embodiment of the invention, there can be up to 14 slave nodes connected to the serial bus which can be addressed by the master.

The addresses of the slave nodes may be as signed by hardware jumpers in each of the slave nodes. For example, as illustrated in Fig. 2 the logic level at a number of ports 30 may be held high via separate resistors, with jumpers 31 selectively connected to ground reference to bring the logic level of determined ports low, thereby to establish the address of the slave node.

2. A two bit address of a slave sub node connected to the addressed slave node, thereby permitting four sub nodes to be coupled to each slave node.

3. A two bit Command control, wherein:

00    signifies that the master node will broadcast a message in common to all of the slave nodes.

01    signifies that the master node will transmit a message to a slave node.

10    signifies that the master node is polling the slave nodes to determine if any of them have a message to transmit.

11    signifies idle polling during initialization.

The (REPLY) response:

This signal always originates in the slave nodes, is in response to an =ADD.CMD¢ signal from the master node, and is comprised of the following bits:

1. A two bit checksum of header and reply.

2. A two bit reply message, as follows:

A. If master wants to transmit:

01    A receive buffer is available 10 A receive buffer not available •

B. If master is polling the slaves:

00    There is no message to send and node and the receive buffer is available.

01    There is no message to send but the receive buffer is not available.

10    The addressed slave wants to send a message.

C. During idle poll, the reply is 11.

3. A four bit status message, each bit of which corresponds to a separate slave sub node:

A. When the master wants to transmit:

1 at a bit position indicates that the receive buffer corresponding to an addressed sub node is ready to receive data.

0 at a bit position indicates that the receive buffer correspondent to an addressed sub node is not ready to receive data.

B. When the master is polling the slaves:

1 at a bit position indicates that the transmit buffer of the slave node contains a message from the corresponding slave sub node to be transmitted.

0 at a bit position indicates that the transmit buffer of the slave node does not have any messages. All bits are 0 if there are no slaves.

It is of course apparent that the bits of the =ADD.CMD¢ and (REPLY) signals say be varied in order to conform to different numbers of slave nodes and sub nodes.

=BYTE.C¢ and (BYTE.C) are bytes that signal the number of data bytes of =DATA¢ or (DATA) that will be transmitted by the master node or slave node. As will be discussed, there is a

maximum number of bytes of data that can be transmitted in any message, preferably 35.

In accordance with the preferred embodiment of the invention, the program of the master node includes polling sequences for polling the slave nodes and receiving messages therefrom, each polling sequence being followed by the transmission of a message from the master node, if the master node has a message to send.

In a polling sequence, the slave nodes are all sequentially polled (at a rate of about 100 microseconds per node) or until a slave node sends a reply that it has a message to send, followed by the sending of the message. After the receipt of this message, the master node then waits 2 to 4 milliseconds to check if it has a message to send to the slave nodes. If no message is indicated to be present in its transmit buffer, it commences a new polling sequence. If the master node has a message to transmit, the message will be sent before a new polling sequence.

In a polling sequence, if a slave node transmits a message, that sequence will not be continued. The message is first transmitted to the master node. The next polling sequence will begin with the next slave node in the sequence, in order to equalize the opportunity for each slave node to transmit messages to the master node. The master node may have a poll table in order to keep track of the polling sequence, in order to assure such equal polling of all of the slave nodes.

In accordance with the preferred program, a polled slave node should reply within 0.1 ms upon receipt of the =ADD.COM¢ command. The master node will wait up to 0.15 ms for the (REPLY) after sending the =ADD.COM¢. The time interval between the start of one byte transmission and the start of the next one, after the (REPLY) is exchanged, should not exceed 40us. The (ACK/NAK) should be received within 50 us after the last data CRCL is sent. Receiving is aborted if the receiving interval exceeds 200 us, i.e. the receiving of data from after the (REPLY) to the CRCL. A message exchange time for the longest one (35 bytes + 6 bytes overhead) should not exceed 1.5 ms. Idle polling time should be minimum 70 us (35*2) to maximum of 0.185 ms (0.35 + 0.15). The microcontroller is dedicated to communication, while transmitting or receiving, and all interrupts are disabled during this period.

In a further preferred feature of the invention, only a limited number of data bytes may be transmitted in each message, e.g. from 1 to 35. The programs of the master and slave nodes decompose large messages to small "packets" of data, up to 35 bytes, at the source nodes and reconstructs these packages at the destination nodes.

During a data transmission, the master and slave nodes do not know if a message being received is a large message, they only know that a message packet is being sent.

In large messages, the byte following the number of bytes field may be used by the system to enable the master system or slave system to reconstruct the message. This may be effected by the program of the master system, or by the slave sub nodes (if they are provided in the system). The application programs of the master and slave nodes should reserve appropriate amount of buffers in their RAM space. A byte count of zero is not allowed. The most significant bit (MSB) of the byte count is used for the transmitting sequence number. This MSB is transparent to an application program of the master and slave nodes. The systems externally of the interfaces masks out the MSB, use it, and pass out the value range 1 to 35 to an application program of the master system or sub nodes. It takes approximately 1.5 ms to transmit 35 data bytes and 6 bytes of the associated overhead, for a total of 41 bytes.

When the master node receives a message from its terminal, i.e. the master system, it must pass it on to the destination. The master node thus has a transmit buffer that must be empty before it can receive another message from its system. All messages from slave nodes to the master system must hence go first to the master node.

If a slave node indicates to the master that it has a message to transmit, after the master node has received a slave node message but before the message is sent to the master system, the master node will first send the message from the slave node to the master system, and then it will send the master system message to the slave node.

Message sequencing may be used to detect a duplicated message, i.e., an identical message is transmitted more than once due to the retransmission upon detecting an error condition. When a duplication is detected, the message is discarded. For example, the master node transmits a message, and a slave node received it correctly, but suppose that (ACK) is not delivered from a slave to a master. Then, the master will re-transmit the same message, resulting in a duplicated message at the slave node.

In general, a transmission node sends a sequence number to a receiving node. The receiving node updates the receive sequence number when $_=$ACK¢ (master sends $_=$ACK¢) or (ACK) (slave sends (ACK)) is sent to the transmitting node. After the transmitting node receives $_=$ACK¢ or (ACK), it updates the transmit sequence number, finishing one cycle. At the end of each cycle, the transmit sequence number and the receive sequence number should be the same.

A slave node maintains one pair of receive-transmit sequence numbers for the master node. The master node maintains one pair of receive-transmit sequence number for EACH slave node. Let variables MTxx, MRxx, STxx, and SRxx be for the master transmit sequence number for a slave node xx, the transmit sequence number for a slave node xx, the transmit sequence number in a slave node xx, and the receive sequence number in a slave node xx, respectively. When the master is powered up, the sequence numbers (all one bit wide) are cleared by the set-up routine of the communication driver. When a slave node is powered-up, sequence numbers are cleared (zeros). Also, when the master sends the command CMD-001 to a slave, the above 4 variables (4 sequence numbers) are cleared.

When the master transmits a message to a slave, it sends the MTxx in the highest bit of the $_=$BYTE.C¢. If the slave receives the message without an error, then it complements the SRxx and sends the (ACK); otherwise it sends the (NAK). If the master receives the (ACK) without an error, then it complements the MTxx: otherwise the master will proceed for error recovery. At the successful reception of the (ACK), both the MTxx and the SRVxx should have the same value. The procedures when a slave transmits a buffer are similar. Sequence numbers are always handled by the communication driver.

Broadcast messages of idle polling do not have any relations with the sequence numbers.

Communications between the master node and the master system, and between the slave node and slave sub nodes, may be effected by conventional means and protocols, with the flags of the nodes being set in conventional manner when the respective receive and transmit buffers are full.

While the invention has been disclosed and described with reference to a single embodiment, it will be apparent that variations and modification may be made therein, and it is therefore intended in the following claims to cover each such variation and modification as falls within the true spirit and scope of the invention.

**Claims**

**1.** In an apparatus for receiving data and control signals from a bus and for applying data and control signals to said bus, wherein the apparatus includes a transmit buffer for storing messages for application to the bus, means for storing the full or empty states of said transmit buffer, and a controller,

the improvement wherein said controller comprises means responsive to the receipt of a signal from said bus that includes a predetermined control signal for applying to said bus a byte signal representing the number of bytes of data stored in said transmit buffer, and means responsive to the application of said byte signal to said bus for applying said data bytes to said bus, whereby the number of data bytes applied to said bus corresponds to said byte signal.

**2.** The apparatus of claim 1 further comprising means responsive to the receipt of said predetermined control signal for applying to said bus a reply signal before applying said byte signal thereto, said reply signal including a checksum of the predetermined control signal and the reply signal and the status of said transmit buffer.

**3.** The apparatus of claim 1 further comprising means responsive to the application of said data bytes to said bus for applying cyclic redundancy check bytes to said bus corresponding to said byte signal and data signals.

**4.** In an apparatus for receiving data and control signals from a bus and for applying data and control signals to said bus, wherein the apparatus includes a receive buffer for receiving messages from the bus, a transmit buffer for storing messages for application to the bus, means for storing the full or empty states of said receive and transmit buffers, and a controller,

the improvement wherein said apparatus comprises means for storing an address unique to said apparatus, and said controller comprises means responsive to the receipt of a signal from said bus that includes said address and a first control signal for applying to said bus a byte signal representing the number of bytes of data stored in said transmit buffer, means responsive to the application of said byte signal to said bus for applying said data bytes to said bus, whereby the number of data bytes applied to said bus corresponds to said byte signal.

**5.** The apparatus of claim 4 wherein said bus is a serial bus.

**6.** The apparatus of claim 4 wherein said apparatus is a peripheral device of a mail processing system.

**7.** The apparatus of claim 4 further comprising means responsive to the receipt of said address and first control signal for applying to said bus a reply signal before applying said byte signal thereto, said reply signal including a checksum of the address and first control signal and the reply signal and the status of said transmit buffer.

**8.** The apparatus of claim 4 further comprising means responsive to the application of said data bytes to said bus for applying cyclic redundancy check bytes to said bus corresponding to said byte signal and data signals.

**9.** A communication system for communication between a master node and a plurality of slave nodes via a bus, wherein each of said master and slave nodes includes control means, and means for transmitting control and data bytes via said bus and for receiving control and data bytes from said bus,

the improvement wherein each of said slave nodes has a unique address, said master node comprises means for polling said slave nodes by applying address signals to said bus corresponding sequentially to the addresses of said slave nodes, and wherein each of said slave nodes comprises means responsive to the receipt of an address signal corresponding thereto for applying a reply signal to said bus, means responsive to the application of said reply signal to said bus for applying a byte signal to said bus corresponding to a number of bytes, and means responsive to application of said byte signal to said bus for applying a number of data bytes to said bus corresponding to said byte signal.

**10.** The system of claim 9 wherein said means for applying a reply signal comprises means applying a checksum signal to said bus corresponding to said address signal and said reply signal.

**11.** The system of claim 9 wherein said slave nodes further comprise means responsive to the application of said data bytes to said bus for applying cyclic redundancy check bytes to said bus corresponding to said byte signal and data bytes.

**12.** In a communication system for communication of messages from a first node via a bus,

the improvement wherein said first node comprises means for applying messages packets to said bus having a maximum of N bytes, wherein N is an integer greater then one in response to the receipt from said bus of a signal requesting the application of a message packet to said bus by said first node, said first node further comprising means for decomposing messages for transmission thereby that have a greater number of bytes than N into a plurality of message packets each having no greater than N bytes, and means for sequentially transmitting said plurality of message packets in response to the receipt of sequential request for messages from said bus.

**13.** The communication system of claim 12 wherein said means for decomposing comprises means for including control information for the reconstruction of said message in the first byte of the first message packet of said plurality of message packets.

**14.** A method for communicating with an apparatus for receiving data and control signals from a bus and for applying data and control signals to said bus, wherein the apparatus includes a transmit buffer for storing messages for application to the bus, and a controller,

said method comprising responding to the receipt of a signal from said bus that includes a predetermined control signal by applying to said bus a byte signal representing the number of bytes of data stored in said transmit buffer, and, applying said data bytes to said bus in response to the application of said byte signal to said bus, whereby the number of data bytes applied to said bus corresponds to said byte signal.

**15.** A method for communicating with an apparatus for receiving data and control signals from a bus and for applying data and control signals to said bus, wherein the apparatus includes a receive buffer for receiving messages from the bus, a transmit buffer for storing messages for application to the bus, means for storing the full or empty states of said receive and transmit buffers, and a controller,

said method comprising storing an address unique to said apparatus, applying to said bus a byte signal representing the number of bytes of data stored in said transmit buffer in response to the receipt of a signal from said bus that includes said address and a first control signal, and applying said data bytes to said bus in response to the application of said byte signal to said bus, whereby the number of data bytes applied to said bus corresponds to said byte signal.

**16.** The method of claim 15 further comprising applying to said bus a reply signal before applying said byte signal thereto in response to the receipt of said address and first control signal, said reply signal including a checksum of the address and first control signal and the reply signal and the status of said transmit buffer.

**16**. The method of claim 15 further comprising applying cyclic redundancy check bytes to said bus corresponding to said byte signal and data signals in response to the application of said data bytes to said bus.

**17.** A method for communication of messages from a first node via a bus, comprising applying messages packets to said bus having a maximum of N bytes, wherein N is an integer greater then one in response to the receipt from said bus of a signal requesting the application of a message packet to said bus by said first node, decomposing messages for transmission by said first node that have a greater number of bytes than N into a plurality of message packets each having no greater than N bytes, and sequentially transmitting said plurality of message packets in response to the receipt of sequential request for messages from said bus.

**18.** A mail processing arrangement comprising apparatus according to any of claims 1 to 8, or a system according to any of claims 9 to 13, or operable in accordance with the method of any of claims 14 to 17.

FIG. 1

SUB NODES

SLAVE MODE

SERIAL COMMUNICATION BUS

MASTER MODE

MASTER SYSTEM

15

16

11

15

16

11'

13

15

16

11"

14

12

10

EP 0 503 323 A2

9

FIG. 2